# EUROPEAN PATENT APPLICATION

(11) **EP 2 333 353 A2**
(43) Date of publication of application: **15.06.2011**
(21) Application number: 09014953.5
(22) Date of filing: 02.12.2009
(51) Int. Cl.: F16B 5/00

(54) **Longitudinal sliding joint**

(30) Priority: 03.12.2008 IT BO20080728
(71) Applicant: Lolli, Paride, 00124 Roma (IT)
(72) Inventor: Musio, Antonio, 48017 Conselice (Ravenna) (IT)
(74) Representative: Paolini, Elena

(57) **Abstract**

It comprises a level board (1) on which is carried out a hollow (2) with inside walls (3) perpendicular to one another with a groove (5) and an inside profile (7) in which comes to longitudinally slide an outside profile (9) of an other level board equal and complementary to the inside profile (7). The outside profile (9) consists of a beating parts (10) with surfaces (11, 12) perpendicular each other and protruding part (13) having the same shape and dimension of the groove (5).

## Description

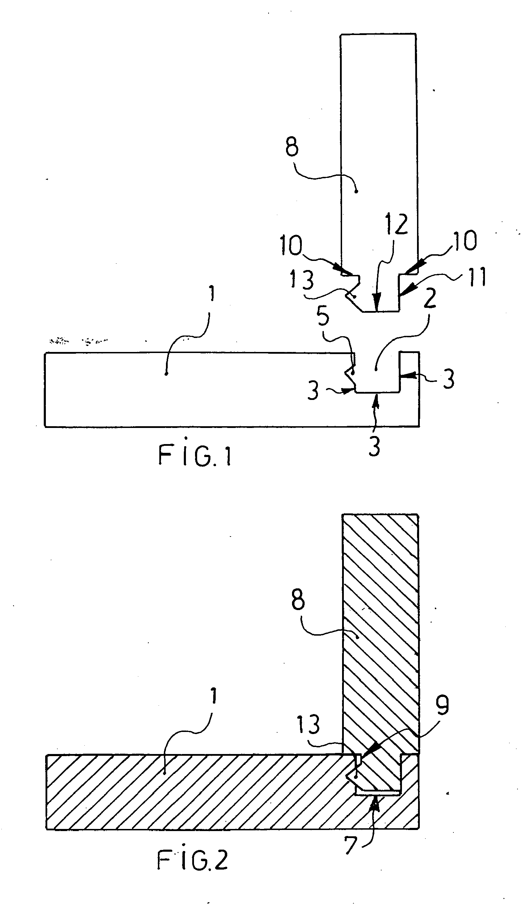

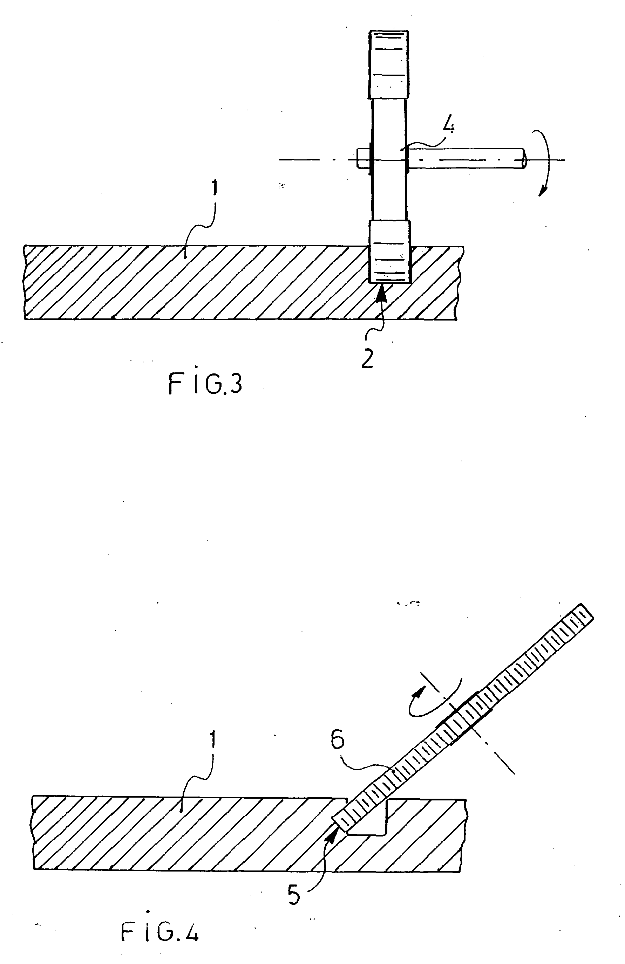

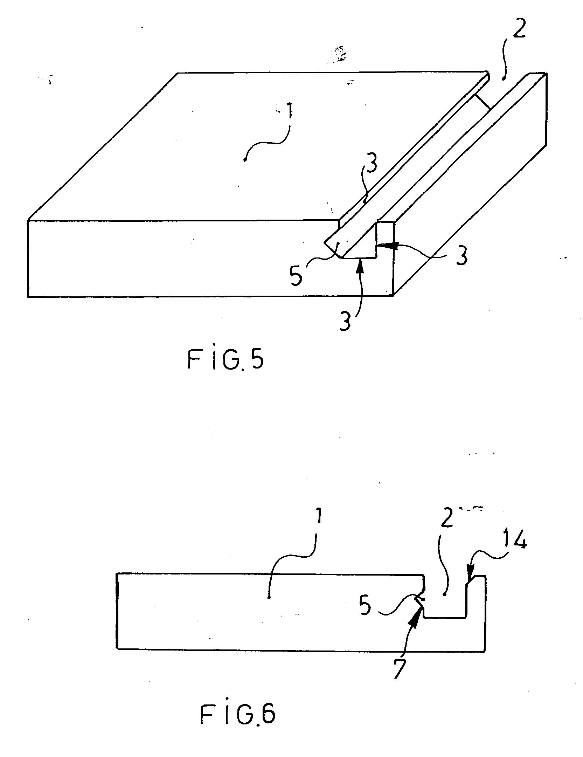

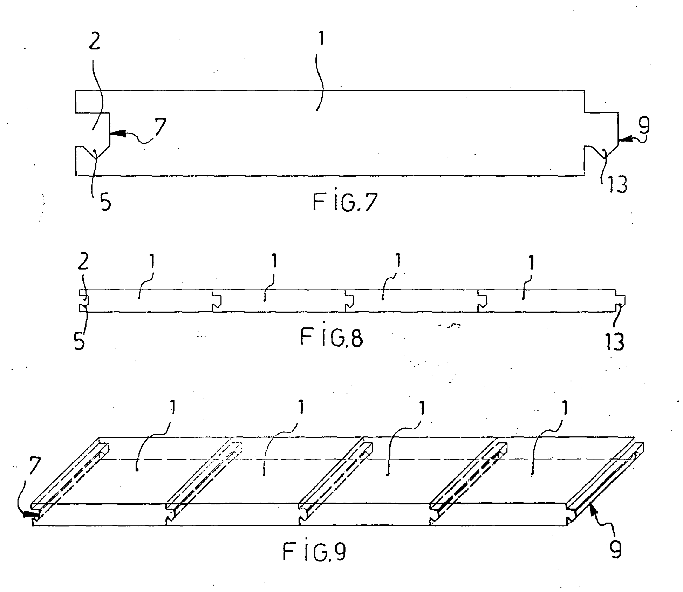

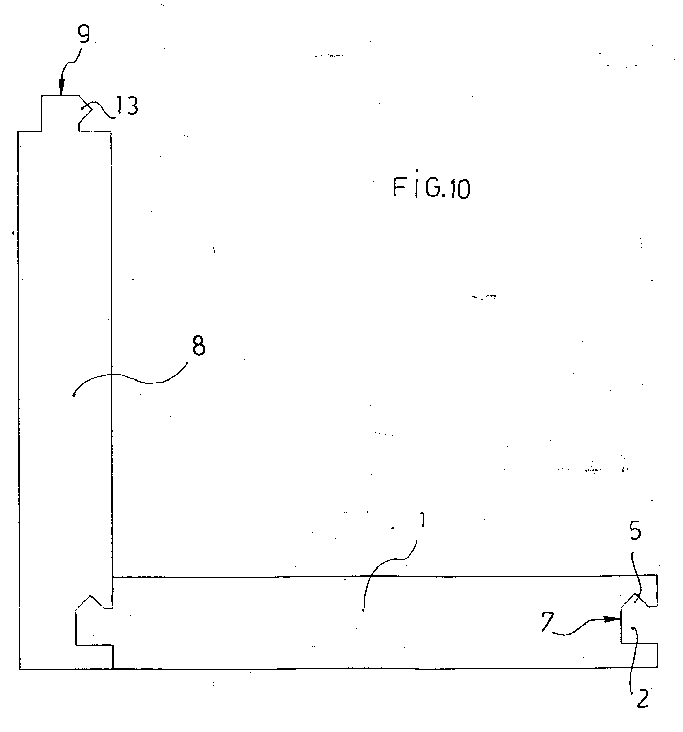

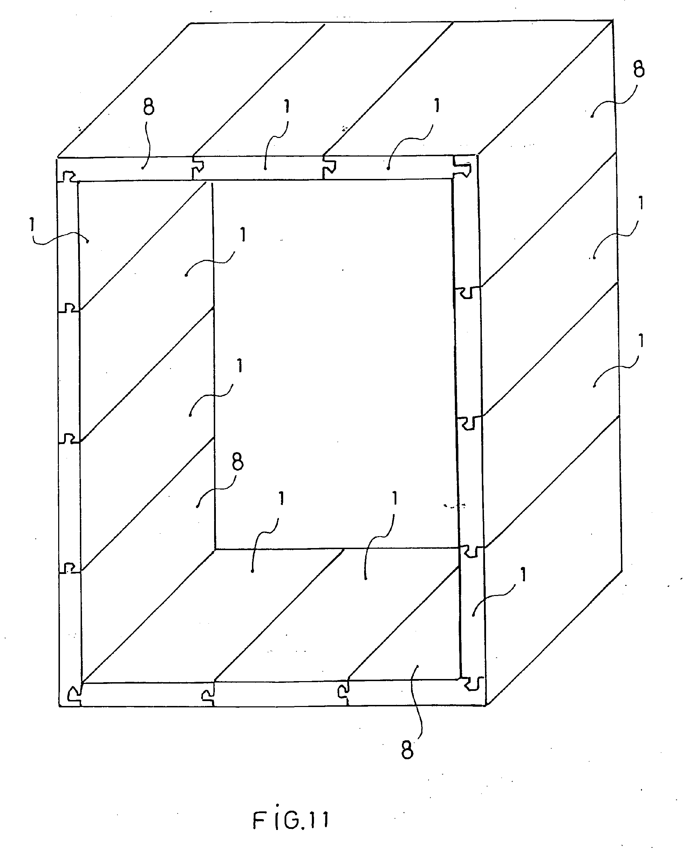

The invention refers to a joint for boards in wood or in any other material and to the method to realize part of this joint, obtained with high speed of manufacturing. In the workings on wood or on other materials different types of joint are known and the pertinent workings to obtain said joints. In the art the profile of the joints is essentially obtained with milling machines, i.e. working centres that use workings of frontal milling by tools with vertical rotation axis and plane-conical bits and/or tools for shoulders. The use of the frontal milling in the workings onto hollow parts, however, limits the production speed. In the art and with the profiles with joints known are produced, in plane workings, ten metres per minute with died times between a worked piece and the subsequent one to be worked. Realizing the joint by the invented method are obtained, on an average, eighty metres per minute of ended goods in plane workings. Besides to the economic advantage obtained with the increasing of the productivity, the invented longitudinal sliding joint has the possibility to realize the union of boards both to have plane surfaces than to obtain surfaces perpendicular each other, such as surfaces consist of plane and perpendicular surfaces. The longitudinal sliding joint is realized with groove onto an inside wall of the hollow and such groove is not realized by cutter with angulated bits (cutter for hollows) but by circular saw that cuts the groove with high speed or, in equal way, by circular cutter with limited axial extension of the bits that cuts the groove with high speed such as it arranges a peripheral milling and not a frontal milling. The invention is illustrated in a merely indicative and not limiting way in the drawings of sheets 1, 2, 3, 4, 5 and 6. In sheet 1 figure 1 is lateral view of the joint with the parts to be connected not assembled. Figure 2 is transversal section view of the parts assembled in the joint. In sheet 2 figure 3 is section view on transversal plane to the advancement way of the board in working in the step of realization of the hollow. Figure 4 is view in section on transversal plane to the advancement way in the step of realization of the groove. In sheet 3 figure 5 is perspective view of the hollow with the groove realized on the upper face of the plane board. Figure 6 is lateral view of an other method to realize the hollow with groove, i.e. with chamfer. In sheet 4 figure 7 is lateral view of a single board having hollow with groove at a border and at the other border outside profile with the same shape and dimension for the longitudinal sliding joint between boards of the same type. Figure 8 is lateral view of more boards connected by joint. Figure 9 is perspective view of connected boards to realize a plane surface. In sheet 5 figure 10 is lateral view of connected boards with lateral sliding joint with surfaces perpendicular each other. In sheet 6 figure 11 is perspective view of an embodiment with realization of a structure having connected boards to form plane surfaces e for surfaces perpendicular each other. In a preferred embodiment but not exclusive the joint consists of a level board 1 on which is carried out a hollow 2 with inside walls 3 perpendicular to one another. This working is actuated by means of surface cylindrical cutter 4 with axis of rotation of the cutting tool horizontal for peripheral milling with high cutting speed. At a vertical wall of the hollow 2 a groove 5 is realized, instead of with the conventional cutters with angulated bit, i.e. with cutters for hollow with frontal milling, by circular saw 6, placed with angulation and depth of cut to obtain the inside profile 7 of the hollow 2. In further embodiment the circular saw 6 can be changed with dish cutter with limited axial extension of the cutting tools to realize not a frontal milling but a peripheral milling with high cutting speed. On further board 8 is realized an outside profile 9 equal and complementary to the inside profile 7, i.e. having shape and dimensions suitable to the longitudinal sliding joint of the boards 1 and 8 perpendicular between them. The use in subsequent and onto a same machinery of the surface cylindrical cutter 4 with rotation axis of the tool horizontal and of the circular saw 6 or the disk cutter for peripheral milling in linear advancement of the board permits to have the inside profile 7 of the hollow 2 in extremely quick time. The profile 9 consists of a beating parts 10 with surfaces 11 and 12 perpendicular each other and protruding part 13 having the same shape and dimension of the groove 5. The hollow 2 can be realized onto one or more faces of the level board 1 or on the border of the said level board, so to respectively obtain joint between the boards perpendicular each other or joints with boards of the same type with joint each other to obtain level surfaces. Placing the hollows 2 and the grooves 5 both onto the border than onto the faces is possible to obtain level surfaces and perpendicular each other to have sides and corners. In a further embodiment the hollow 2 can have, long a vertical wall, a chamfer 14 to be obtained with circular saw 6 to have bigger angulation of the circular saw 6 in realization step of the groove 5. The board 1 may have any shape on the base of the use necessity. The invented joint can provide variations all part of the inventive step. The materials on which the joint is to be realized with its working are to be changed on the base of the use necessity. Moreover, all technical details can be changed with other similar ones.

## Claims

1. Longitudinal sliding joint comprising a level board (1) on which is carried out a hollow (2) with inside walls (3) perpendicular to one another **characterized in that** to have a groove (5) and an inside profile (7) in which comes to longitudinally slide an outside profile (9) of an other level board equal and complementary to the inside profile (7), with the profile (9) consists of a beating parts (10) with surfaces (11, 12) perpendicular each other and protruding part (13) having the same shape and dimension of the groove (5).

2. Longitudinal sliding joint, as per claim 1, **characterized in that** the hollow (2) can be realized onto one or more faces of the level board (1) or to the border of the level board, so to respectively obtain joint between the boards perpendicular each other or joints with boards of the same type with joint each other to obtain level surfaces.

3. Longitudinal sliding joint, as to the previous claims, **characterized in that** placing the hollows (2) and the grooves (5) both onto the border than onto the faces is possible to obtain level surfaces and perpendicular each other to obtain sides and corners.

4. Longitudinal sliding joint, as to the previous claims, **characterized in that** the hollow (2) can have, long a vertical wall, a chamfer (14).

5. Longitudinal sliding joint, as to the previous claims, **characterized in that** the board (1) may have any shape on the base of the use necessity and that the board (1) can be realized in wood or other material.

6. Longitudinal sliding joint, as to the previous claims, **characterized in that** the hollow (2) is actuated by means of surface cylindrical cutter (4) with axis of rotation of the cutting tool horizontal and by peripheral milling with cutting highspeed and with the groove (5) to be obtained by a circular saw prepared with angle and depth of cutting to obtain the inside profile of the hollow (2).

7. Longitudinal sliding joint, as per claims 1, 2, 3, 4 and 5, **characterized in that** the hollow (5) is obtained by means of surface cylindrical cutter (4) with axis of rotation of the cutting tool horizontal and by peripheral milling with cutting highspeed and with the groove (5) to be obtained by a disk cutter with limited axial extension of the cutting tools to actuate a peripheral milling with cutting highspeed.

8. Longitudinal sliding joint, as to the claims 6 or 7, **characterized in that** the use in sequence and onto the same machinery of the surface cylindrical cutter (4) with axis of rotation of the cutting tools horizontal for peripheral milling and of the circular saw (6) or of the disk cutter with limited axial extension of the cutting tools for peripheral milling, in linear advancement of the level board (1), permits to obtain the inside profile (7) of the hollow in very quick times.
